# EUROPEAN PATENT SPECIFICATION

(11) **EP 1 084 808 B1**
(45) Date of publication and mention of the grant of the patent: **04.06.2003**
(21) Application number: 99117962.3
(22) Date of filing: 16.09.1999
(51) Int. Cl.: B29B 7/42, B01F 15/00, B01F 7/08

(54) **Continuous mixing feeder**
Kontinuierliche Misch- und Zuführvorrichtung
Dispositif d'alimentation à mélangeur continu

(43) Date of publication of application: 21.03.2001
(73) Proprietor: THE JAPAN STEEL WORKS, LTD., Tokyo 100 (JP)
(72) Inventor: Yoshida, Minoru, c/o The Japan Steel Works, Ltd., Hiroshima-shi, Hiroshima (JP); Mizuguchi, Hideki, c/o The Japan Steel Works, Ltd., Hiroshima-shi, Hiroshima (JP); Horie, Kunihiro, c/o The Japan Steel Works, Ltd., Hiroshima-shi, Hiroshima (JP)
(74) Representative: Grünecker, Kinkeldey, Stockmair & Schwanhäusser Anwaltssozietät

(56) References cited:
- WO-A-87/05255
- DE-A- 3 145 376
- DE-B- 1 041 065
- DE-C- 208 983
- US-A- 3 710 983
- PATENT ABSTRACTS OF JAPAN vol. 1998, no. 01, 30 January 1998 (1998-01-30) & JP 09 255461 A (SAKUMA YOSHIO), 30 September 1997 (1997-09-30)
- PATENT ABSTRACTS OF JAPAN vol. 017, no. 336 (M-1435), 25 June 1993 (1993-06-25) & JP 05 042532 A (MATSUSHITA ELECTRIC WORKS LTD), 23 February 1993 (1993-02-23)

## Description

### BACKGROUND OF THE INVENTION

### Field of invention

The present invention relates to a continuos mixing feeder, capable of adding and mixing at least one kind of an additive with a powdery or granular main material, and continuously supplying the same to the next step quantitatively.

### Related art

When a powdery or granular main material is needed to be supplied with at least one kind of an additive added thereto, to a supply portion of an extruder or an injection molding machine, a method (A) or a method (B) mentioned below is adopted on the whole.
(A) A method of supplying a main material and an additive by a screw type feeder to a supply portion of an extruder or an injection molding machine.
(B) A method of mixing a main material and at least one kind of an additive by a batch type mixer and storing the same in a storage tank, and supplying the mixture stored in the storage tank to a supply portion of an extruder or an injection molding machine via a transport pipe.

Among the above-mentioned conventional techniques, the method (A) involves a problem in that the quality of the molded products can be irregular due to difficulty in homogeneously dispersing an additive in a powdery or granular main material when it is used as means for supply to an extruder or an injection molding machine.

Further, the method (B) involves a problem in change of the mixing ratio of an additive to a main material due to adherence of the mixture to a transport pipe when an adherent material is included, or unevenness of the material due to separation during passage in a transport pipe when materials with a large specific gravity difference are included.

### SUMMARY OF THE INVENTION

In view of the above-mentioned problems in the conventional techniques, an object of the invention is to provide a continuous mixing feeder, capable of adding and mixing at least one kind of an additive with a powdery or granular main material, and continuously supplying the same quantitatively.

In order to achieve the above-mentioned object, a continuous mixing feeder of the invention comprises a barrel, a screw provided rotatably in the barrel, and rotation drive means for rotating the screw, with a quantitative extruding zone, a mixing zone, and a scraping out zone formed from the upstream side by changing the shape of the barrel and the screw, wherein the quantitative extruding zone comprises a front side cylindrical part having a supply opening for supplying a main material on the upstream end side of the barrel and a quantitative extruding part having a full flight provided on the peripheral surface of the axis part of the screw, the mixing zone comprises a trough part with a substantially U-shaped cross-section, having at least one additive supply opening on the upstream end side of the barrel and a mixing part having a plate-like agitating blade projecting in the radial direction formed zigzag with a distance with each other along the axial direction on the peripheral surface of the axis part of the screw and a ribbon screw supported by the agitating blade having a distance with respect to the peripheral surface of the axis part, and the scraping out zone comprises a rear side cylindrical part having a discharge opening for discharging a mixture from the scraping out zone on the downstream end side of the barrel and a scraping out part having a scraping agitating blade on the peripheral surface of the axis part of the screw.

Moreover, the scraping out part having the scraping agitating blade on the peripheral surface of the axis part of the screw can be provided detachable so as to be replaced by another scraping out part having a scraping agitating blade with a different shape on the peripheral surface of the axis part of the screw.

### BRIEF DESCRIPTION DRAWINGS

FIG. 1 is a diagram for explaining a continuous mixing feeder according to one embodiment;
FIG. 2 is a schematic cross-sectional view taken on the line A-A of FIG. 1; and
FIG. 3 is a schematic cross-sectional view taken on the line B-B of FIG. 1.

### DETAILED DESCRIPTION OF PREFERRED EMBODIMENT

An embodiment of a continuous mixing feeder according to the invention will be explained based on drawings.

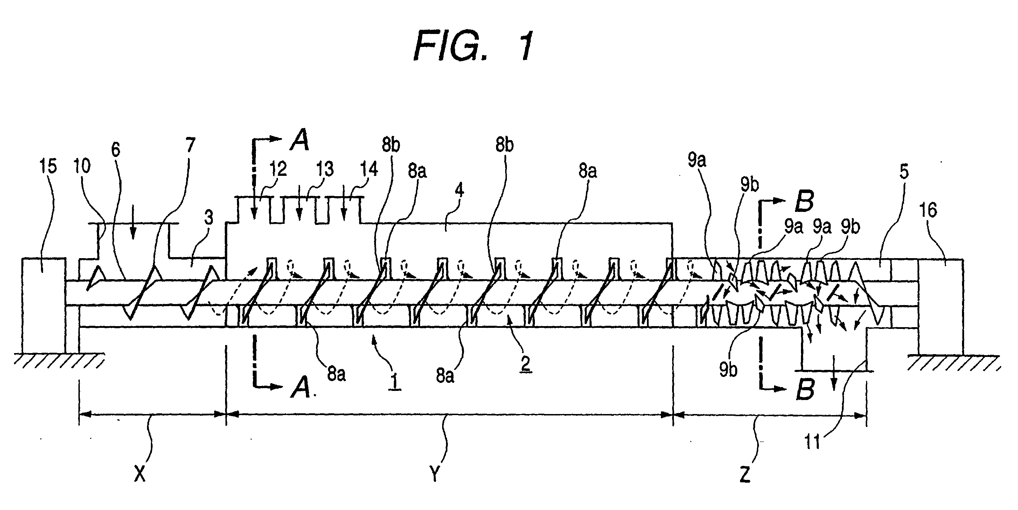

As shown in FIG. 1, the continuous mixing feeder comprises a barrel 1, a screw 2 provided rotatably in the barrel 1, and rotation drive means 15 for rotating the screw 2, with a quantitative extruding zone X, a mixing zone Y, and a scraping out zone Z formed successively from the upstream side by changing the shape of the barrel 1 and the screw 2 as described later.

The quantitative extruding zone X comprises a front side cylindrical part 3 in the barrel 1, and a quantitative extruding part having a full flight 7 provided on the peripheral surface of the axis part 6 of the screw 2 such that a main material supplied from a supply opening 10 provided on the upstream end side of the cylindrical part 3 is transported quantitatively to the mixing zone Y.

The tip part projecting outward from a rear side cylindrical part 5 of the screw 2 is supported rotatably by a supporting part 16 via a bearing (not illustrated).

The mixing zone Y comprises a trough part 4 having a substantially U-shaped cross-section in the barrel 1, and a mixing part having a plate-like agitating blade 8a projecting in the radial direction formed zigzag with a distance with each other along the axial direction on the peripheral surface of the axis part 6 of the screw 2 provided in the trough part 4 and a ribbon screw 8b supported by the agitating blade 8a having a distance with respect to the peripheral surface of the axis part 6 such that a main material quantitatively transported from the quantitative extruding zone X and additives supplied each from a first additive supply opening 12, a second additive supply opening 13 and a third additive supply opening 14 provided with a distance with each other in the axial direction on the upstream end side of the trough part 4 of the barrel 1 are mixed so as to provide a mixture, wherein the additives are dispersed homogeneously in the main material, to the scraping out zone Z.

The number of the additive supply openings is not limited to three, but an optional number can be adopted as needed.

The scraping out zone Z comprises a rear side cylindrical part 5 in the barrel 1, and a scraping out part having clover-like forward paddles 9a and backward paddles 9b formed alternately with a distance with each other in the axial direction on the peripheral surface of the axis part 6 of the screw 2 provided in the rear side cylindrical part 5 such that the mixture transported from the mixing zone *Y* is further mixed and scraped out from a discharge opening 11 provided on the downstream end side of the rear side cylindrical part 5.

In this embodiment, the forward paddles 9a are formed with a tilt angle with respect to the axial direction such that a mixture can be transported to the downstream side, and the backward paddles 9b are formed with a tilt angle with respect to the axial direction such that the mixture can be forced back to the upstream side.

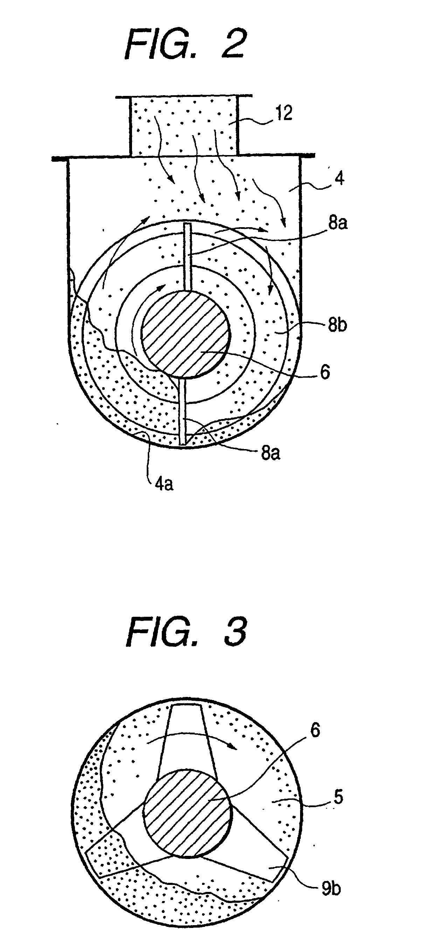

Operation of the continuous mixing feeder of this embodiment will be explained.
(1) A powdery or granular main material supplied to the quantitative extruding zone X via the supply opening 10 is transported quantitatively to the mixing zone Y by the quantitative extruding part, wherein the full flight 7 is provided on the peripheral surface of the axis part 6 of the screw 2 provided in the front side cylindrical part 3 of the barrel 1.
(2) The powdery or granular main material quantitatively transported to the mixing zone Y by the step (1) is mixed with a each predetermined amount of a first additive, a second additive, and a third additive supplied from the first additive supply opening 12, the second additive supply opening 13, and the third additive supply opening 14 by the agitating blade 8a and the ribbon screw 8b so as to be a mixture with the additives dispersed homogeneously and transported to the scraping out zone Z.
   In this step, the mixture to be transported in the trough part 4 with a substantially U-shaped cross-section, is scraped upward from the trough bottom surface 4a of the trough part 4 with a substantially U-shaped cross-section many times as shown in FIG. 2 so as to be mixed while floating and turning round by the interaction of the agitating blade 8a and the ribbon screw 8b, and is transported to the downstream side without stagnating the main material or the additives on the trough bottom surface 4a. As a result, a mixture with the additives dispersed in the main material can be transported to the scraping out zone Z.
(3) After the step (2), the mixture is transported to the downstream side and forced back to the upstream side alternately by the forward paddles 9a and the backward paddles 9b in the scraping out zone Z. As a result, the mixture with the filling ratio heightened and the additives homogeneously dispersed in the main material can be discharged outside the apparatus continuously from the discharge opening 11.

The scraping out part having a scraping agitating blade on the peripheral surface of the axis part 6 of the screw 2 according to the invention is not limited to the scraping out part having the clover-like forward paddles 9a and backward paddles 9b formed alternately with a distance with each other in the axial direction on the peripheral surface of the axis part 6 described in this embodiment, but scraping out parts provided with a full flight on the peripheral surface of the axis part, or provided with a scraping agitating blade with another shape, such as a ribbon screw, can be adopted as well.

Moreover, the scraping out part can be provided detachably . via a coupling at the boundary part with the mixing part of the screw 2 so as to be replaced by another scraping out part having a full flight or a scraping agitating blade with a different shape, such as a ribbon screw on the peripheral surface of the axis part. Accordingly, main materials and/or additives with different physical properties can be handled with one continuous mixing feeder.

According to the configurations, the invention can achieve the following effects.

A main material transported quantitatively from the quantitative extruding zone and added additives are mixed while floating and turning round many times in the mixing zone so as to be a mixture dispersed and mixed homogeneously. The mixture is discharged continuously from the discharge opening via the scraping out zone without stagnating in the barrel. As a result, a mixture with additives homogeneously dispersed in a main material can be supplied continuously and stably to the supply part of the next step.

## Claims

1. A continuous mixing feeder comprising
a barrel (1);
a screw (2) provided rotatably in the barrel (1), and
rotation drive means (15) for rotating the screw (2), with a quantitative extruding zone (X), a mixing zone (Y) and a scraping out zone (Z),
said extruding zone (X) includes a front side cylindrical part (3) having a supply opening (10) for supplying a main material on the upstream end side of the barrel (1) and an extruding part having a full flight (7) provided on the peripheral surface of the axis part (6) of the screw (2);
said mixing zone (Y) including a trough part (4) with a substantially U-shaped cross-section, having at least one additive supply opening (12; 13; 14) on the upstream end side of the barrel (1) and a mixing part having a plate-like agitating blade (8a) projecting in the radial direction formed zigzag with a distance with each other along the axial direction on the peripheral surface of the axis part (6) of the screw (2) and a ribbon screw (8b) supported by the agitating blade (8a) having a distance with respect to the peripheral surface of the axis part (6); and
said scraping out zone (Z) includes a rear side cylindrical part (5) having a discharge opening (11) for discharging a mixture from the scraping out zone (Z) on the downstream end side of the barrel (1) and a scraping out part having a scraping agitating blade on the peripheral surface of the axis part of the screw (2),
wherein extruding zone (X) mixing zone (Y), and the scraping out zone (Z) are formed from the upstream side by changing the shape of the barrel (1) and the screw (2).

2. The continuous mixing feeder according to claim 1, wherein the scraping out part having the scraping agitating blade on the peripheral surface of the axis part (6) of the screw (2) is provided detachable so as to be replaced by another scraping out part having a scraping agitating blade with a different shape on the peripheral surface of the axis part (6) of the screw (2).

## Patentansprüche

1. Kontinuierlich arbeitende Mischungszuführvorrichtung, umfassend:
eine Trommel (1);
eine Schnecke (2), die drehbar in der Trommel (1) vorgesehen ist, und
eine Rotationsantriebseinrichtung (15) zum Drehen der Schnecke (2), mit einer Mengenextrudierzone (X),einer Mischzone (Y) und einer Abstreifzone (Z),
wobei die Extrudierzone (X) einen vorderseitigen zylindrischen Teil (3) einschließt_{,} der eine Zuführöffnung (10) aufweist zum Zuführen eines Hauptmaterials an dem stromaufwärtigen Ende der Trommel (1), und einen Extrudierteil aufweist, der einen vollständigen Flügel (7) aufweist, der auf der Umfangsfläche des Achsenteils (6) der Schnecke (2) vorgesehen ist;
wobei die Mischzone (Y) einen Wannenteil (4) mit einem im wesentlichen U-fömigen Querschnitt einschließt, der mindestens eine Zusatzstoff-Zuführöffnung (12; 13; 14) auf dem stromaufwärtigen Ende der Trommel (1) aufweist und einen Mischteil aufweist, der einen plattenförmigen Rührflügel (8a) aufweist, der in der Radialrichtung hervorsteht und zickzackförmig mit einem Abstand zueinander entlang der Axalrichtung auf der Umfangsfläche des Achsenteils (6) der Schnecke (2) ausgebildet ist, und eine Bandschnecke (8b) aufweist, die von dem Rührflügel (8a) getragen wird und einen Abstand in Bezug zur Umfangsfläche des Achsenteils (6) aufweist; und
wobei die Abstreifzone (Z) einen hinteren zylindrischen Teil (5) einschließt, der eine Austragöffnung (11) zum Austragen eines Gemisches aus der Abstreifzone (Z) auf der stromabwärtigen Seite der Trommel (1) aufweist und einen Abstreifteil aufweist, der einen Abstreifrührflügel auf der Umfangsfläche des Achsenteils der Schnecke (2) aufweist,
wobei die Extrudierzone (X), die Mischzone (Y) und die Abstreifzone (Z) von der stromaufwärtigen Seite her durch Ändem der Form der Trommel (1) und der Schnecke (2) ausgebildet sind.

2. Kontinuierlich arbeitende Mischungszuführvorrichtung nach Anspruch 1, wobei der Abstreifteil, der den Abstreifrührflügel auf der Umfangsfläche des Achsenteils (6) der Schnecke (2) aufweist, abnehmbar vorgesehen ist, um durch einen anderen Abstreifteil, der einen Abstreifrührflügel mit einer anderen Form auf der Umfangsfläche des Achsenteils (6) der Schnecke (2) aufweist, ersetzt zu werden.

## Revendications

1. Dispositif d'alimentation à mélangeur continu comprenant :
un fût (1) ;
une vis (2) placée en rotation dans le fût (1), et
des moyens d'entraînement en rotation (15) pour faire tourner la vis (2), avec une zone d'extrusion quantitative (X), une zone de mélange (Y) et une zone de nettoyage (Z),
ladite zone d'extrusion (X) comprend une partie cylindrique avant (3) ayant une ouverture d'alimentation (10) pour fournir un matériau principal sur le côté d'extrémité amont du fût (1) et une partie d'extrusion ayant une aile pleine (7) placée sur la surface périphérique de la partie d'axe (6) de la vis (2) ;
ladite zone de mélange (Y) comprend une partie de passage (4) avec une section transversale sensiblement en forme de U, ayant au moins une ouverture d'alimentation supplémentaire (12; 13; 14) sur le côté d'extrémité amont du fût (1) et une partie de mélange ayant une lame d'agitation sous forme de plaques (8a) formant saillie dans la direction radiale placées en zigzag avec une distance entre elle dans la direction axiale sur la surface périphérique de la partie d'axe (6) de la vis (2) et une vis en ruban (8b) supportée par la lame d'agitation (8a) espacée rapport à la surface périphérique de la partie d'axe (6) ; et
ladite zone de nettoyage (7) comprend une partie cylindrique arrière (5) ayant une ouverture d'évacuation (11) pour évacuer un mélange en dehors de la zone de nettoyage (Z) sur le côté d'extrémité avale du fût (1) et une partie de nettoyage ayant une lame d'agitation de nettoyage sur la surface périphérique de la partie d'axe de la vis dans laquelle la zone d'extrusion (X), la zone de mélange (Y) et la zone de nettoyage (Z) sont formées à partir du côté amont en changeant la forme du fût (1) et de la vis (2).

2. Dispositif d'alimentation à mélangeur continu selon la revendication 1, dans laquelle la partie de nettoyage ayant la lame d'agitation de nettoyage sur la surface périphérique de la partie d'axe (6) de la vis (2) est prévue détachable de façon à être remplacée par une autre partie de nettoyage ayant une lame d'agitation de nettoyage de forme différente sur la surface périphérique de la partie d'axe (6) de la vis (2).
